# EUROPEAN PATENT APPLICATION

(11) **EP 3 258 447 A1**
(43) Date of publication of application: **20.12.2017**
(21) Application number: 17175307.2
(22) Date of filing: 09.06.2017
(51) Int. Cl.: G07C 9/00, G06Q 10/00

(54) **DISTRIBUTED CREDENTIAL LOCK SYSTEM**

(30) Priority: 15.06.2016 US 201615183713
(71) Applicant: Digilock Asia Ltd., Kowloon (HK)
(72) Inventor: GOKCEBAY, Asil T., Petaluma, CA 94954 (US)
(74) Representative: FRKelly

(57) **Abstract**

At a facility or system of facilities wherein desks in associated facilities are rented or assigned to individuals on a temporary basis, sometimes called a distributed desk facility, electronic locks are provided for the desks and associated cabinets to be used by renters or employees. Via a server either at the facility or in communication with the facility, a system-registered user reserves a desk via smartphone. With the reservation are the user's credentials along with time, date and duration for use of a desk. The server sends a token code to the user's smartphone. At the appointed time, the user accesses a user's lock or locks via the smartphone which transmits the token code to open or unopen the lock or locks. A reservation can simply be for any desk at a facility.

## Description

### Background of the Invention

This invention concerns distributed workspace facilities, such as for employees of a firm or for short term rental by individual users, wherein no individual has long-term exclusive use of a workspace or work station, normally including a desk and possibly other office furniture. Specifically the invention concerns control of locks that are associated with workspaces at such a facility, to enable the workspace user to lock and unlock one or more locks associated with the workspace during the duration of use.

Distributed workspace office systems are experiencing increasing use, both for in-house employees of a firm and for facilities that simply rent desks or workspaces to non-employee individuals on a temporary basis. Such temporary or rotating use of desks, cubicles or offices provides a great increase in efficiency, particularly regarding capital costs, space requirements, furniture and other equipment. Often an individual's phone number or extension is transferred to the workspace which he/she will temporarily occupy. Individual, personalized content can also be transferred to a computer on such a desk, content particular to the temporary user.

However, at such temporary or rotating use facilities there has been a need for security. The temporary workspace user should be able to lock the desk or associated office furniture or storage furniture or locker, or an office door when the user is away from the desk. Mechanical keys could be issued for the period a desk is to be used, but this would require management personnel to issue and keep track of the keys (which could be several for each desk, work station, office or cubicle), and inevitably some keys would be lost by inadvertent failure to return the keys, causing further security concerns and costs, including re-keying locks.

### Summary of the Invention

This invention provides an efficient solution to the above-mentioned problems by providing a system of electronic locks for a distributed workspace or desk facility. The facility can be either a firm with a number of office employees, many of whom are often traveling or otherwise not always in need of a desk, or a temporary workspace or "distributed desk" facility providing short term rental of desks and accompanying equipment for anyone desiring such a service. In the latter case the renting individual will preferably be pre-registered with the system; in the former case the user will be registered as an employee.

In either event, a user possesses a smartphone or other hand-held computer device with which to communicate with a server servicing the facility having the workspaces, and with the locks themselves. Such a computer server in a preferred embodiment is simply in the cloud (it can also reside elsewhere or could be local), but in one form of the invention a local controller is also included at the facility for controlling the locks.

An individual desiring to use the facility first registers with the system as a registered user. Whether the intended user is an employee or simply a renter, the server will typically initiate the registration by sending an email to the user with a link to download a program or "app" for the user's smartphone. This can follow an inquiry by a potential renter. The user downloads the app, which could be from an Android or other app shopping site, for example. The initial registration can also be just by downloading an app from the app site and filling in the personal details. The system will send an email to the user to verify him/her requiring the activation from the email submitted. The user registers, with all needed personal information, and is asked to set a password. This password will be required each time the user makes a reservation via the app. The system through the cloud or local server confirms the individual is now a registered user who can reserve and use desks as needed.

When a reservation is to be made for a workspace, the user opens the app on his smartphone and communicates with the system's server. Before a reservation can be made the user must enter the appropriate password. The server determines through a database what desk (or office/workspace/cubicle) will be provided for the user at the desired time. This is communicated back to the user along with a key code or token, and in the preferred embodiment the token contains all information needed to securely operate a lock or locks at the facility using the smartphone. In this case the system maintains the workspaces and the locks at the workspaces and their availability. For example if the reservation is for a specific workstation then the system will not reserve it for another user until such time when the reservation of the first person has expired and if the reservation is for any available workspace the system will not make reservation or issue tokens exceeding the total number of the workspaces.

Alternatively, the server can communicate with a local lock controller if provided at the facility, to transfer to the controller all user data/credentials of the particular registered user, along with the token code, and the date, time and duration for use of the desk. The remote server communicates with the local lock controller via Internet or if the server is local, via LAN or WiFi.

The locks of the workspace, associated cabinets, lockers or other office furniture, or office doors, are electronic, accessible by codes and capable of wireless communication with the user's smartphone, such as by Bluetooth or other wireless means of communication. On confirmation of the reservation, the system has sent the user a token as noted above, i.e. a code that will open the lock or locks at the workspace designated for the user, at the particular time. In the primary embodiment all reservation and user information is carried in the user's smartphone (as token) and transferred from the smartphone (as token) into the lock via the app on initial operation. However, if the facility has a local lock controller, the lock controller receives the token from the server and sends the relevant data to the lock or locks subject to the reservation. The lock at the desk is thereby set to be accessible by the particular assigned token at the date and time (and for the prescribed duration) of the reservation.

When the user arrives at the facility, he proceeds directly to the room or cubicle or desk/work station that has been assigned. The lock or locks that are associated with that desk or workspace can then be used by this person. For example, when a desk is to be locked the user can bring up the app, which will show an icon designated as a key to the lock. The user then touches this key icon, and the app preferably requests the password, to confirm this is the correct person to be accessing the lock. When the password has been entered, the token is transmitted and the lock or locks can be operated, for locking and unlocking. The entry of the password could be required earlier, when the user seeks to use the app. Note that authentication of the user, when using the app, can be by thumb print or fingerprint (or other biometric authentication) rather than use of a password. The password can be tied internally to the fingerprint. Note also, the locks can have keypads for access, so that the app provides the user a code for keypad entry rather than a wirelessly transmittable token.

The app can include some form of visual or preferably audible notification to the user, particularly in a rental situation, when the designated period of use is about to expire. The user can then request the system to grant further time or he must vacate in the event another user is scheduled.

The electronic locks of the system each have batteries, which must use minimal power for maximum life (alternatively they can be wired to a power source). One aspect of the invention is that the locks are normally quiescent, but in the case a local controller is at the facility, the locks send out an inquiry to the lock controller at designed intervals, e.g. every ten minutes. This inquiry checks for any updated instructions, which are downloaded to the lock along with the customer number or other ID of each person that will be using the desk, and with date, time and duration. The lock's memory can store a schedule for several days or even several weeks or more. Note also, the user may be required first to touch a button on the lock to "wake up" the lock before using the smartphone to operate it.

If a customer/user walks into the facility without having a reservation, the system can be set up to allow the user access by "instant reservation". The user contacts the system via the app and if a workspace is available it can be assigned instantly or the user may be able to pick any available workspace. This can be done in the same manner as above with or without a local controller.

In another scenario the user can make a reservation online, using any computer, and can be assigned a token. This can be transferred to a user's smartphone, or if it is a numerical combination to be entered on a keypad, that information can simply be given to the user via the computer, and he will have access to a lock (a particular lock or any available lock) when arriving at the facility.

It is among the objects of the invention to provide security for distributed workspace or rotating workspace systems for temporary users, in an efficient and economical way. These and other objects, advantages and features of the invention will be apparent from the following description of a preferred embodiment, considered along with the accompanying drawings.

The present invention provides a system as claimed in claim 1 or claim 8 and a method as claimed in claim 11.

### Description of the Drawings

Figure 1 is a schematic diagram indicating components and procedure according to the invention.
Figure 2 is a similar diagram with a variation.
Figure 3 is another diagram showing the invention with a further variation.

### Description of Preferred Embodiments

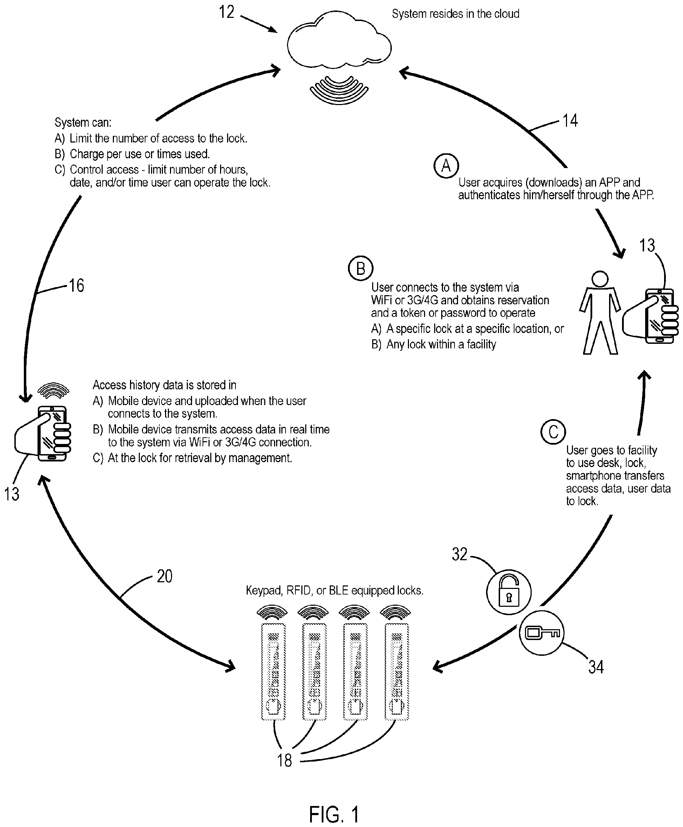

Figure 1 indicates schematically a system 10 for reservation and use of a distributed workspace facility wherein electronic locks are provided on desks and other office furniture, for the use of temporary workspace users. The system of the invention applies to a situation wherein employee use non-dedicated desks on a rotating basis, although the discussion herein sometimes refers to a rental desk or workspace service available to renters, which is another application of the invention.

In Figure 1 the system has a server that resides in the cloud or elsewhere, indicated at 12, for a distributed workspace rental service with a facility providing desks, cubicles, etc. for temporary use. Here, the cloud or local server 12 communicates by Internet with a user's mobile device (e.g. smartphone) 13. Communication goes both ways, as indicated by the arrows 14 and 16. The arrow 14 indicates the user, at the first instance, downloads an app from the cloud or other server, and the user is authenticated through the app. The user with the device 13 is now set up to use the system. As at "B" in the drawing, the user connects to the system via Wi-Fi or 3G/4G and obtains a token or password for a) a specific lock at a specific location or b) any lock within a facility. The user can then go to a specific lock or any lock within the facility to open/relock the lock using the app and the token or password provided by the system, as indicated at "C". At the facility visited by the user are a series of electronic locks 18. The user communicates with one of the locks via wireless communication (Bluetooth, etc.). In this one scenario the user can choose any workspace or lock(s) not currently in use at the facility, in the event no specific lock was assigned. If a specific lock at a specific location was assigned (in step "B" above), the user's mobile device is brought to that particular workspace/lock. In the latter case a reservation has been made through the cloud or local server, for a specific period of time. The server can determine availability for such a reservation based on its own database with a schedule of all desks/locks and periods reserved.

The arrow 16 on the left side of Figure 1, along with the arrow 20, indicates the system communicating with a user's mobile device 13, and relevant data then being forwarded from the mobile device 13 to a lock 18 at a facility. Such communications assure that the server will not make conflicting reservations for particular desks/locks. The token can carry much more than a password, and can include user information, desk reserved, and time slot reserved.

As indicated in the drawing, the system can limit the number of accesses to the lock by a user; charge user's per use or for the period of time used; control access to locks, e.g. limit the number of hours of use, date, and/or the time of day the user can operate the lock. Data for these controls are all communicated to the user's mobile device 13, which itself can impose these limitations on use, and the limitations can also be communicated to the lock. Again, all these data can be carried in the token.

As also indicated in the drawing, access history data, i.e. audit trail, can be stored in a user's mobile device, then uploaded to the server-based system when the user connects to the system. These data can include any maintenance needs for the electronic lock (low battery, malfunction, etc.) Alternatively, the mobile device can transmit access data relating to the user in real time to the system via Wi-Fi or 3G/4G connection. As a further alternative, the access data relating to a user can be stored at the lock, for retrieval by management from the lock. Note that the lock's ID is communicated to the smartphone or device 13 at the time of use.

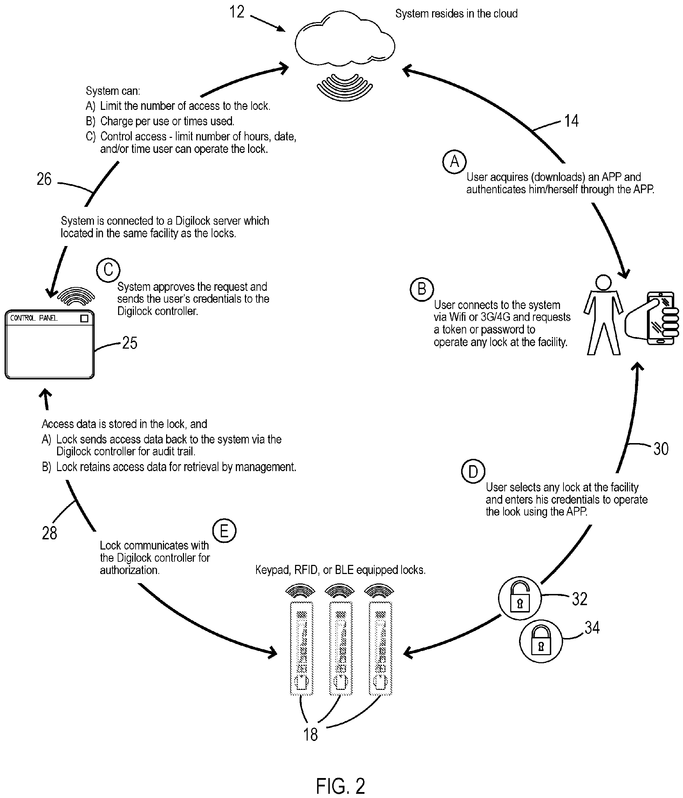

Figure 2 shows a variation of the Figure 1 system, in this case including a local controller 25 at a facility with the temporary-use desks. The controller 25 communicates by Internet with the cloud or LAN or WiFi if local server 12, as noted by the arrow 26. Further, the controller 25 communicates with locks 18 on the premises of the facility, as indicated by the arrow 28. This can be by Bluetooth, BLE, NFC or WiFi.

In use of the system, in step "A" the user acquires the system app and is authenticated through the app, similar to the procedure described above. In step "B", the user connects to the system, when a workspace is desired, and requests a token or password to operate any workspace (desk, cabinet, etc.) at a facility (workspace unassigned). In this scenario, the system 12 approves the request and sends the user's credentials to the on-site controller 25, as indicated at "C". The local controller, in communication with the locks 18, has data as to whether a lock will be available, or the system 12 can maintain this information. The user has requested a specific time slot; he will be denied access (and a token) only if all desks/locks are scheduled to be used by others at that desired time.

At "D" in Figure 2, the user goes to the facility at the desired time and selects any available lock, as indicated by the arrow 30. The user enters his credentials into the mobile device in order to operate the lock, using the app. When the user attempts to operate the lock, the lock communicates with the local controller 25 (arrow 28) for authorization to allow this user access, indicated in the drawing at "E". As above, communications between the mobile device and a lock are by local wireless communication, such as RFID, Bluetooth or BLE, or the lock can have a keypad for manual entry of a code which is supplied to the user's mobile device. The same is true for the system of Figure 1 above. Note that in the Figure 2 system, with a local controller included, the user's smartphone may transmit only a simple ID number or code to the lock, rather than carrying all the data described with reference to Figure 1.

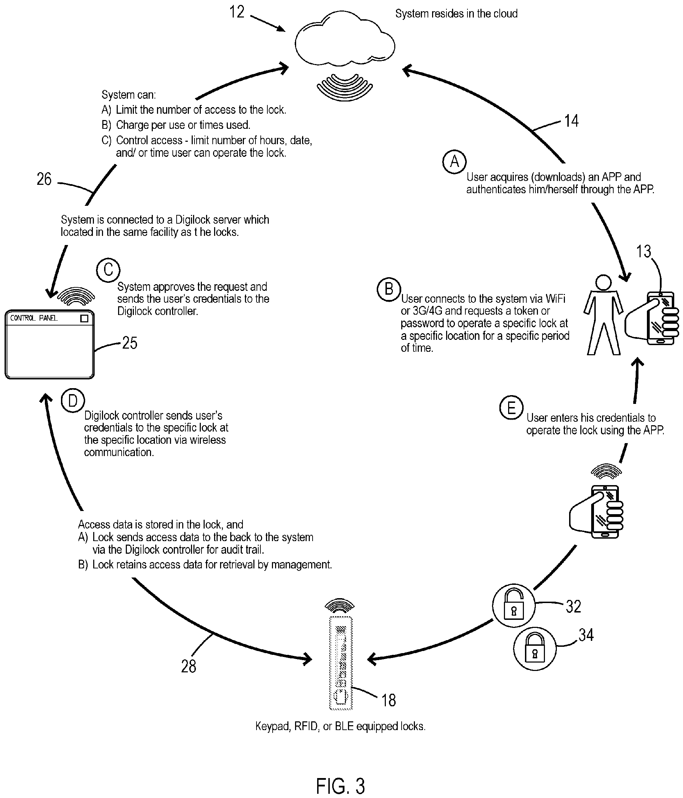

The modified system indicated schematically in Figure 3 is a full reservation system. Again, the system 12, with a server, resides in the cloud 12 or it is a local server at the facility. The user's downloading of the app and authentication, step "A" are similar to what is described above and indicated at the arrow 14. At "B" the routine is different - the user connects to the system residing in the cloud server or local server and requests a token or password to operate a specific lock at a specific location, for a specific period of time. As at "C", the system approves the user request as to location, specific lock and time, and sends the information, including the user's credentials, to the local controller 25 at the facility selected by the user. As at "D", the local controller 25 sends the user's credentials and reservation information to the specific lock 18 at that facility. The lock 18 then holds all information regarding the user's reservation. This communication is indicated by the arrow 28 in the drawing.

At the appointed time, as at "E", the user goes to the selected facility and enters his credentials to operate the lock using the app in the mobile device. In this scenario the access data relating to use of the lock by the user preferably is stored in the lock 18. The lock can then send access data history back to the system via the local controller 25, for audit trail. Alternatively, the lock could retain this access data history for retrieval for management of the facility or system.

As above, the system in Figure 3 can limit the number of hours or the date/time window a user can use or access the lock. It can also limit the number of accesses to the lock permitted to the user, and can charge the user's credit card per use or by the time of the use.

Communications to the electronic locks 18 include schedules for use of locks by customers/users, identified by user name or member number, with the time and duration of the reservation. The particular lock 18 associated with a reserved workspace is addressed by the specific packet of data intended for that desk and lock or locks, and this data packet will be ignored by other locks.

As described above, communication to locks can occur at preset intervals, such as every ten minutes, at which time the normally-quiescent electronic lock 18 sends out an inquiry signal to the controller 25 looking for any updated instructions, and any such updated instructions will then be sent back to the lock. Alternatively, each lock can simply "listen" for instructions once every ten minutes, the instructions for all locks being continuously broadcast by the controller 25.

On the smartphone app, the screen icons presented to the user for operating a lock can be as indicated at 32, 34 in Figures 1 - 3. Preferably the user's password is required each time the lock is operated. What occurs when the user touches the icon 32 or 34 is that a wireless message is sent from the smartphone 13 to the lock 18, via Bluetooth, BLE, NFC, etc. That signal is a token code as described above, unique for this lock at this particular period of time, or it can be simply a user ID code in the case of the system of Figures 2 and 3 where the locks have user data sent by the local controller. Even in the Figure 1 system, where lock instructions and schedule are carried to a lock by the user's device, only an ID or code will be needed after the user first "checks in" to the lock.

The distributed workspace facilities of Figures 1 - 3 may or may not have a receptionist. In either event the user selects a desk or workspace (sometimes referred to herein broadly by either term "desk" or "workspace", and can include several locks), or goes to a workspace he has reserved. The facility may have a sign-in and payment provision for users, or more preferably, payment can be via the smartphone app as described above (with a credit or debit card on file), communicated to the system 12.

Note that each lock 18 can have a permanent or rotating access code, if it is wirelessly transmitted (as opposed to entry on a keypad of the lock). The code, is blind to the user, sent to the user's device by Internet from the cloud or local server, deleted from the device after use of the desk. This can be for a reserved desk, but it can also work for a randomly-picked desk, if all the locks' code are sent (blindly) to the user's device, then after a desk/lock is selected and used all other codes are deleted from the device.

If the locks do not have permanently assigned codes, the user's smartphone in the unassigned workspace situation can carry a code (issued by the system 12) that is input to the lock when the lock is first used. That will be the lock's code for the time the user occupies the desk.

Note that in the case of an on-site lock controller at a facility, a user's smartphone need not be involved at all, in one implementation of the invention. A user's computer can communicate with the server, providing all the user information and requested reservation details, including workspace, time slot, etc. The system/server can then simply provide the user with a key code for a keypad on a keypad-equipped lock or locks, or the system can simply transmit the user's preregistered (known) code to operate a keypad-equipped lock. In either event, the access code for the lock is set in the lock via the on-site lock controller, which receives this information from the server. When the user goes to the facility, only the keypad code is required for use of the lock or locks.

The term smartphone as used herein is intended to include any type of hand-held computer device, including cell phones, tablets and other portable computer devices with Internet capability.

The above described preferred embodiments are intended to illustrate the principles of the invention, but not to limit its scope. Other embodiments and variations to these preferred embodiments will be apparent to those skilled in the art and may be made without departing from the spirit and scope of the invention as defined in the following claims.

## Claims

1. In a system having a plurality of workspaces at one or more facilities for temporary use by temporary users, including locking drawers or panels on desks or on cabinets or lockers or other office furniture associated with a workspace, the improvement comprising:
a plurality of electronic locks at each facility, on said drawers or panels of said desks or other office furniture associated with workspaces for use by temporary users, the locks having wireless means for communication,
a computer server, to communicate by Internet with and receive reservations from temporary users in regard to use of workspaces and electronic locks at the facility,
a series of smartphones or other hand-held computer devices held by potential temporary users, so that a temporary user can communicate with the computer server regarding use of one of said workspaces and electronic locks associated with the workspace, each smartphone or other hand-held computer device of the temporary users having a program to communicate by Internet with the computer server regarding use of locks associated with the workspaces at the facility,
the computer server being capable of sending lock access information including a token code to the smartphone of a temporary user along with confirmation of the reservation, if any has been made, and
each smartphone having local wireless communication capability operable by the temporary user to transmit the token code to lock and unlock one or more designated selected electronic locks associated with a particular workspace at the facility for a desired period of rental time.

2. The system of claim 1, wherein the program of the smartphone or other hand-held computer device, and the computer server, include means enabling a temporary user to reserve a particular workspace at a facility for a particular time, and wherein the program stores reservation data and access data in the smartphone and at the server, and communicates that reservation data and access data to the lock or locks associated with a workspace desk via the temporary user's smartphone.

3. The system of claim 1, wherein each facility with a plurality of workspaces has an on-site lock controller at the facility, the lock controller comprising a computer, and wherein the on-site lock controller communicates with the computer server as to permitted users and workspaces reserved, and also has wireless means for communicating with the electronic locks at the facility, so that the on-site lock controller communicates data to the electronic locks as to reservations by users.

4. The system of claim 3, wherein the token code of the smartphone comprises a code in the smartphone unique to the user.

5. The system of claim 1, wherein the temporary users are renters of the workspace.

6. The system of claim 2, wherein the computer server includes means for using stored reservation data including duration of reservation to prevent further conflicting reservations.

7. The system of claim 1, wherein the program of the smartphone or other hand-held computer device, and the computer server, include means enabling a temporary user to reserve an unspecified workspace at a facility for a particular time, and wherein the server stores reservation data and access data and uses all stored reservation data including duration of reservation so as not to make reservations or issue tokens that would exceed at any time the total number of workspaces at a facility.

8. In a system having a plurality of rental workspaces at one or more facilities for temporary use by renting individuals, including locking drawers or panels on desks or on cabinets or lockers or other office furniture associated with desks, the improvement comprising:
a plurality of electronic locks at each facility, on said drawers or panels of said desks or lockers or other office furniture associated with desks for use by renting individuals, the locks having wireless means for communication,
a computer server, to communicate by Internet with and receive reservations from renting individuals in regard to use of workspaces and electronic locks at the facility,
a series of smartphones or other hand-held computer devices held by potential renting individuals, so that a renting individual can communicate with the computer server regarding use of one of said workspaces and electronic locks associated with the workspace, each smartphone or other hand-held computer device of the renting individuals having a program to communicate by Internet with the computer server regarding use of locks associated with the workspaces at the facility,
the computer server being capable of sending a token code to the smartphone of a renting individual along with confirmation of the reservation, if any has been made, and
each smartphone having local wireless communication capability operable by the renting individual to transmit the token code to lock and unlock one or more designated selected electronic locks associated with a particular workspace at the facility for a desired period of rental time.

9. The system of claim 8, wherein the program of the smartphone or other hand-held computer device, and the computer server, include means enabling a renting individual to reserve a particular workspace at a facility for a particular time, and wherein the program stores reservation data and access data in the smartphone and at the server, and communicates that reservation data and access data to the lock or locks associated with a reserved desk via the renting individual's smartphone.

10. The system of claim 8, wherein each facility with a plurality of rental workspaces has an on-site lock controller at the facility, the lock controller comprising a computer, and wherein the on-site lock controller communicates with the computer server as to permitted users and workspaces reserved, and also has wireless means for communicating with the electronic locks at the facility, so that the on-site lock controller communicates data to the electronic locks as to reservations by users.

11. A method for a temporary user to secure a workspace at a facility providing a plurality of workspaces for temporary use, the facility including locking drawers or panels on desks or on cabinets or lockers or other office furniture associated with a workspace, comprising:
the temporary user with a smartphone, downloads into the smartphone a program for use of at least one said temporary workspace facility,
on desiring a temporary workspace, the temporary user connects to a system server using the smartphone and the program, the system server being associated with and storing data regarding at least one facility with temporary workspaces for temporary users, the facility having electronic locks on said drawers, panels, cabinets, lockers or other office furniture for storage at the temporary workspaces, and the temporary user requests a workspace at said facility for a specific time period,
the temporary user receives from the system server reservation information with a token to operate at least one lock at the facility,
the temporary user goes to the facility with the smartphone at the reserved time,
using the smartphone the temporary user communicates by wireless local communication with an electronic lock or locks at a workspace using the smartphone, the lock including a lock processor and being wireless-enabled, whereby the smartphone transfers the token including access data and user data to the processor of the lock or locks, enabling the temporary user to lock and unlock the locks during the reserved period of time using the smartphone.

12. The method of claim 11, wherein the temporary user reserves a particular desired workspace and, at the facility, goes to the particular desired workspace and communicates with a lock or locks at that workspace.
